Europäisches Patentamt

European Patent Office

Office européen des brevets

(11) Numéro de publication: **0 250 339**
**A1**

# DEMANDE DE BREVET EUROPEEN

(21) Numéro de dépôt: **87420148.6**

(22) Date de dépôt: **04.06.87**

(51) Int. Cl.4: **H 02 P 1/28**
**H 02 P 3/22**

(30) Priorité: **16.06.86 FR 8608985**

(43) Date de publication de la demande:
**23.12.87 Bulletin 87/52**

(84) Etats contractants désignés:
**BE CH DE ES GB IT LI SE**

(71) Demandeur: **A.R.E.EL. AGENCE DE REALISATION ET D'ETUDES ELECTRONIQUES S.C.O.P. Sarl**
**54, rue Raspail**
**F-69150 Decines (FR)**

(72) Inventeur: **Vial, Jean-Luc**
**2, rue de la Moselle**
**F-69008 Lyon (FR)**

**Fayolle, Gérard**
**238, Rue Garibaldi**
**F-69003 Lyon (FR)**

(54) **Dispositif de commande des moteurs à induction triphasés.**

(57) L'invention concerne des dispositifs électroniques de commande de moteur à induction triphasé (5) monté en étoile ou en triangle, permettant d'éffectuer un démarrage progressif en réduisant les surintensités électriques et les chocs mécaniques dans ledit moteur. Le dispositif est constitué par deux modules électroniques (100) et (200) commandant les commutateurs électroniques (101) et (201) et deux résistances série (102), (202). On peut ajouter au dispositif de démarrage, un dispositif de freinage électromagnétique actif lors de la mise hors tension du moteur à induction triphasé constitué par les condensateurs (30), (31), (32), les résistances (27), (28), (29), (33), (34), (35) et les commutateurs électroniques (21) et (22).

FIG.1

EP 0 250 339 A1

## Description

Dispositif de commande des moteurs à induction triphasés.

La présente invention concerne des dispositifs électroniques de commande des moteurs à induction triphasés qui a pour fonction principale d'assurer un démarrage progressif desdits moteurs à induction triphasé, en réduisant les intensités dans les conducteurs électriques d'alimentation et les chocs mécaniques provoqués par ces intensités. D'autres fonctions peuvent s'ajouter à la fonction principale; le freinage du moteur à induction lors de sa mise hors tension, la protection dudit moteur lors d'un incident de fonctionnement.

La présente invention s'applique principalement sur des moteurs à induction triphasés du type standard, montés en étoile ou en triangle, mais peut aussi s'appliquer sur des moteurs à induction spéciaux à commutation de pôles, à rotor résistant, à rotor bobiné ou autres.

Les dispositifs électroniques existants sont complexe et onéreux ou ne réalise pas un bon contrôle des tensions et des intensités dans le moteur triphasé.

Le système présenté par le brevet OSHIMA et AL. No 4072 880 est un système simple, mais la synchronisation et l'équilibrage des courants peut présenter des aléas, et le système ne possède pas de limitation de courant dans les commutateurs électroniques.

Le système présenté par le brevet BRENNEMAN No 4084 406 est complexe et possède une limitation d'intensité réalisée d'une manière globale dans les trois commutateurs électroniques.

Le dispositif de commande, selon la présente invention se caractérise par un système simple ne possédant que deux commutateurs électroniques connectés entre la source de courant triphasé et le moteur à induction triphasé, chacun des commutateurs électroniques ayant un contrôle de synchronisation d'angle de phase et de l'intensité passant dans chacun desdits commutateurs électroniques. Le dispositif électronique a pour fonction de commuter progressivement la tension de la source alternative afin d'éviter les surintensités dans les conducteurs électriques et les chocs mécaniques dans le moteur à induction triphasé et dans la machine entrainée par ledit moteur. Les deux commutateurs électroniques sont commandés par deux modules électroniques identiques effectuant la synchronisation de l'angle de phase et le contrôle desdits commutateurs électroniques. La troisième phase est connectée directement sur le moteur. La commande d'angle de phase effectuée par les modules se fait progressivement en fonction du temps ou en fonction de l'intensité du cou rant passant dans le commutateur électronique commandé. Dans ce dernier cas on peut ajouter un dispositif de protection du moteur à induction qui permet de mettre hors tension ledit moteur lorsque la limitation d'intensité dépasse un certain temps.

Une autre caractéristique de la présente invention est de pouvoir ajouter au système de démarrage, un système de freinage actif lors de la mise hors tension du moteur. Le freinage est du type électromagnétique réalisé à partir de condensateurs et de résistances, l'ensemble étant commuté aux bornes du moteur à induction triphasé à l'aide de commutateur électroniques.

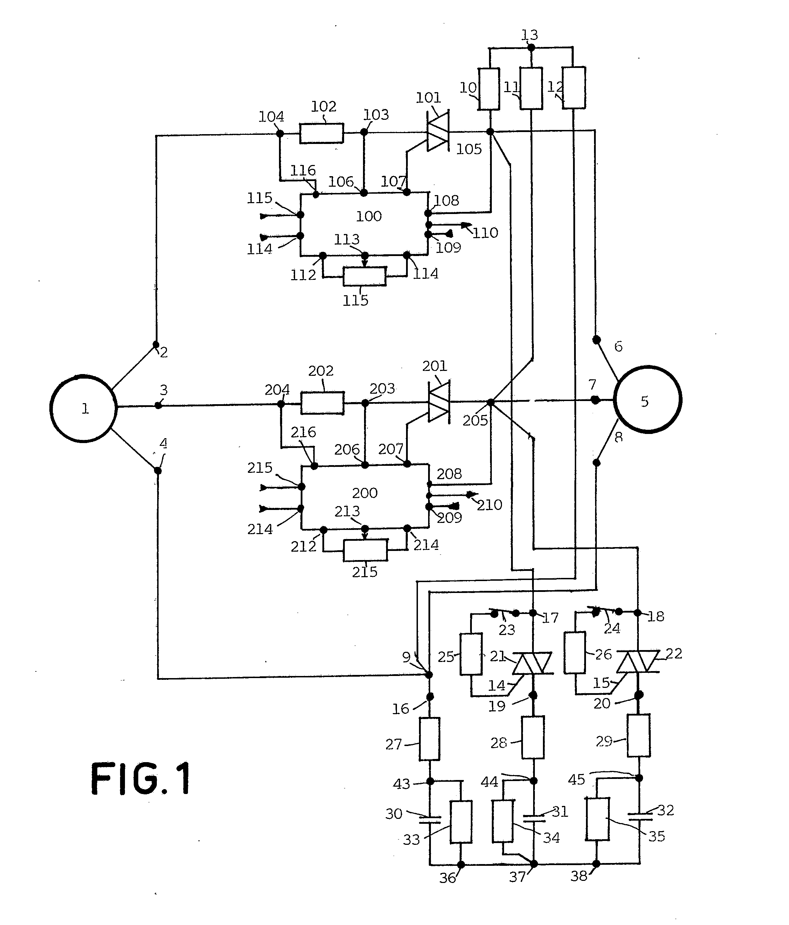

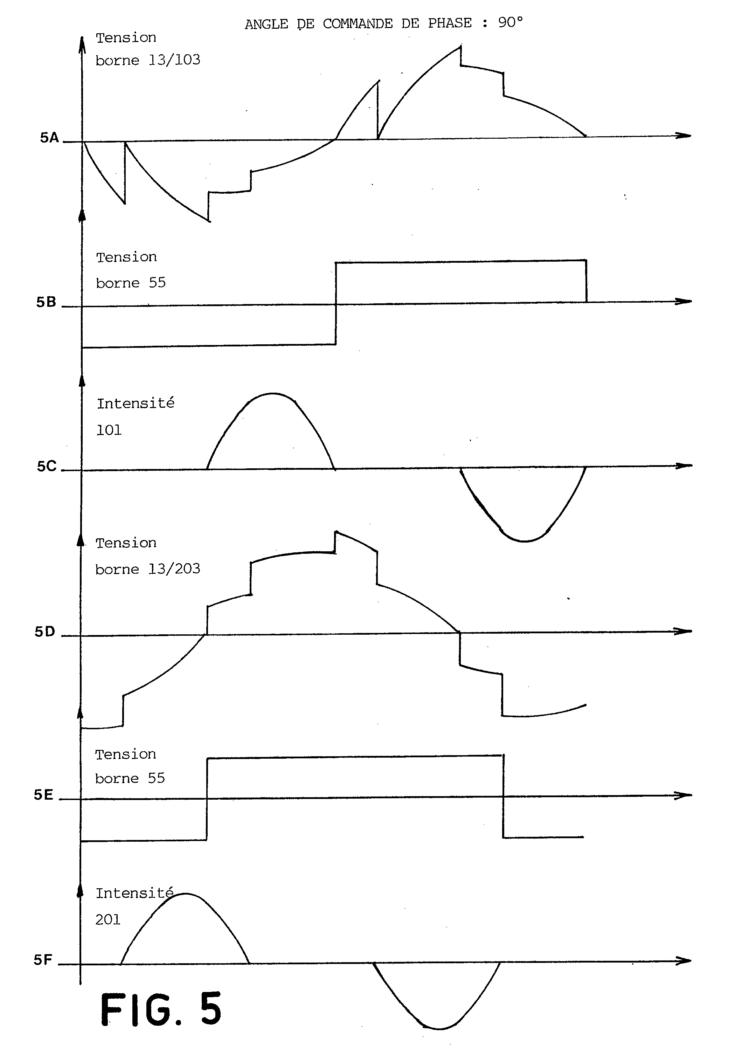

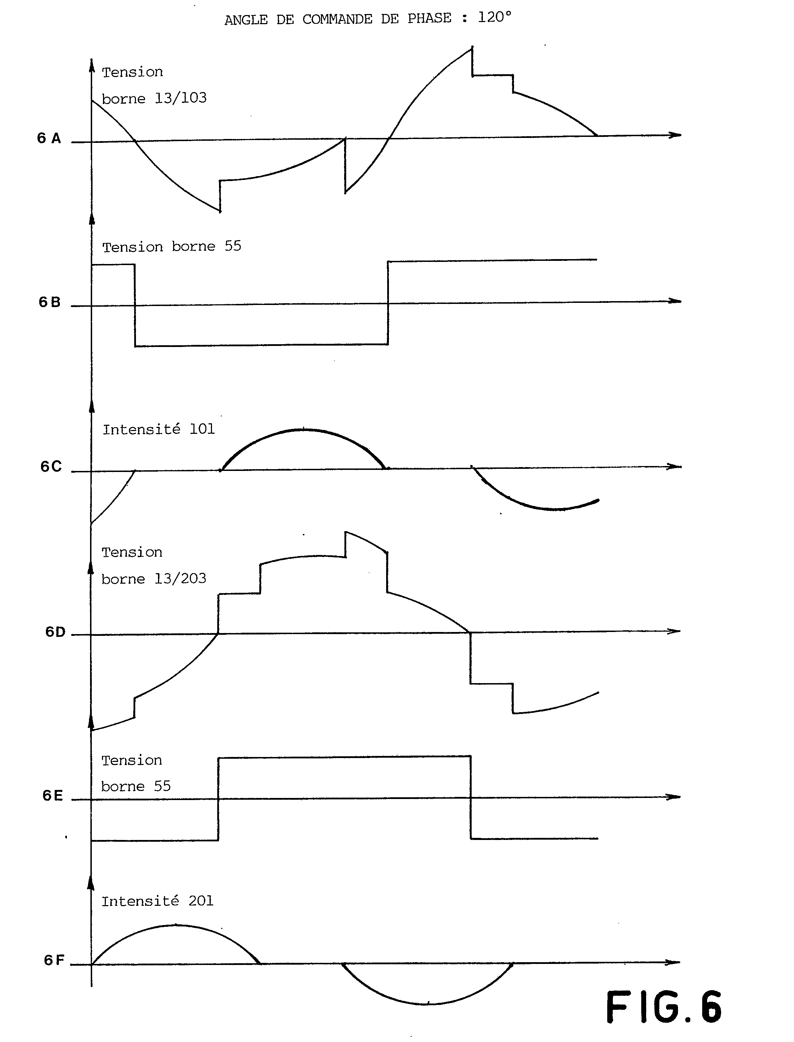

D'autres caractéristiques du dispositif de commande, selon la présente invention apparaîtront à la lecture de la description de l'invention, en référence à la figure 1, 2, 3, 4, 5, 6, et 7 annexées.

Dans la réalisation montrée fig. 1, décrite ci-après, un dispositif de commande, selon l'invention, est connecté à un moteur à induction triphasé 5, par les trois bornes 6, 7, 8, et à une source de courant alternative triphasé 1 par les trois bornes 2, 3, 4. Ledit dispositif de commande est constitué de deux sous-ensembles électroniques identiques, le premier desdits sous-ensembles est connecté entre la borne 2,104 et 6,105, le deuxième sous ensemble est connecté entre la borne 3, 204 et 7, 205. La troisième phase est reliée directement de la source de courant alternative 1 sur le moteur à induction triphasé 5 par les bornes 4, 9, 8.

Chaque sous-ensemble électronique est constitué par un module électronique 100, 200, d'un commutateur électronique 101, 201 et éventuellement d'une résistance série 102, 202.

Le commutateur électronique 101 a son électrode commutée reliée à la borne 6, 105 et son électrode de référence sur la borne 103 reliée à la borne 104, 2, à travers la résistance série 102. Le module électronique 100 commandant le commutateur électronique 101 a une borne 106 de référence de tension reliée à la borne 103, une borne 107 reliée à l'électrode de commande du commutateur électronique, une borne 108 connectée à la borne 105 permettant la détection de conduction ou de non conduction du commutateur électronique 101, une borne 109 d'entrée de signal de synchronisation de l' angle de phase et une borne 114 d'alimentation en courant continu par apport à la borne 103,106.

Le deuxième sous-ensemble électronique constitué du commutateur électronique 201, du module électronique 200 et de la résistance série 202 est identique au premier sous-ensemble électronique.

Selon une caractéristique de la présente invention, lors de la mise sous tension, chaque module électronique 100, 200 commande simultanément chaque commutateur électronique 101, 201 suivant un angle de phase croissant de 0° jusqu'à 180° selon une temporisation interne à chacun des modules 100, 200, afin d'obtenir une tension croissant progressivement aux bornes 6, 7, 8 du moteur à induction triphasé et par conséquent une réduction des surintensités de courant et des chocs mécaniques dans ledit moteur à induction triphasé et dans la machine entraînée par ledit moteur.

La borne 109 est la borne d'entrée de référence de l'angle de phase, la borne 108 est une borne d'entrée de détection de conduction du commutateur électronique 101 qui ajuste la référence de l'angle de phase selon le déphasage tension-intensité du courant dans le moteur à induction triphasé 5.

Selon une autre caractéristique de la présente invention, la référence de l'angle de phase des deux modules 100 et 200 connectée sur les bornes 109 et 209 peut être prise sur la borne 13 nommée neutre artificiel, laquelle borne 13 est le point commun de trois impédances 10, 11, 12, montées en étoile sur la borne 105, 6, la borne 205, 7, et la borne 4, 9, 8.

Cette borne 13 nommée neutre artificiel possède la caractéristique de synchroniser les deux modules avec un déphasage de 60° pour des angles de commande de phase inférieurs à 60°, puis d'augmenter ce déphasage lorsque l'angle de commande de phase s'accroît, pour obtenir un angle de déphasage de 120° lorsque l'angle de commande de phase est de 180°. Cette variation de synchronisation entre les deux modules 100 et 200 permet de mieux équilibrer l'intensité des courants passant dans les commutateurs électroniques 101 et 201.

Les bornes 115 et 215 des modules électroniques 100 et 200 sont des entrées logiques qui permettent dans un état de valider la mise sous tension du moteur à induction triphasé 5 et dans l'autre état de mettre hors tension ledit moteur en provoquant l'arrêt de commande des électrodes de commandes des commutateurs électroniques 101 et 201.

Selon une variante du système de démarrage, selon la présente invention la variation progressive de l'angle de phase des commutateurs électroniques 101 et 201 peut se faire non plus en fonction du temps, mais en fonction de l'intensité du courant passant dans les commutateurs électroniques 101 et 201. L'intensité du courant est détecté proportionnellement par une résistance 102 et 202 en série avec chaque commutateur électronique, la tension receuillie par lesdites résistances sur les bornes 104 et 204 est transmi aux modules 100 et 200 par les bornes 116 et 216. L'intensité du courant circulant dans chaque commutateur électronique est comparée un seuil, si l'intensité dépasse ce seuil l'angle de phase de conduction du commutateur électronique est réduit, si l'intensité du courant est inférieure au seuil l'angle de phase de conduction du commutateur électronique est augmenté. On obtient par ce dispositif un démarrage du moteur à induction triphasé avec une intensité constante dans les deux phases considérées.

Pour une plus grande souplesse d'utilisation de ce dispositif de limitation d'intensité, on peut, au moyen d'un potentiomètre 115 et 215 connecté sur chaque module électronique par les bornes 112, 113, 114, et 212, 213 214, régler le seuil d'intensité de courant désiré en fonction du moteur à induction triphasé choisi et de son application. Ces deux potentiomètres peuvent être couplés mécaniquement sur le même axe pour permettre le réglage simultané et égal des deux seuils d'intensité.

En choisissant ledit seuil d'intensité égal ou supérieur à l'intensité nominal du moteur à induction triphasé, la limitation du courant est active pendant le démarrage ou un fonctionnement anormal dudit moteur: lorsque ledit moteur est démarré et sans surcharge, l'angle de commande de phase est maximun et l'intensité du courant est inférieure au seuil choisi ce qui rend inactive la limitation d'intensité. Pour détecter l'activation ou la non activation de la limitation d'intensité on peut ajouter à chaque module 100 et 200 une sortie logique sur la borne 110, 210. Ladite sorite logique sur chaque module permet de signaler dans un état que le moteur est en état de démarrage, de surcharge ou de défectuosité et dans un autre état que le moteur est démarré et fonctionne normalement. Les deux sorties logiques des bornes 110 et 210 peuvent être utilisé pour indiquer l'état du moteur ou pour mettre hors tension ledit moteur si l'état de limitation exède une durée ou une fréquence.

Selon une autre caractéristique de la présente invention, on peut ajouter au dispositif de démarrage, un dispositif de freinage actif lors de la mise hors tension du moteur à induction triphasé, comme montré fig. 1.

Le dispositif de freinage utilisé est du type électromagnétique réalisé avec des condensateurs 30, 31, 32, des résistances séries 27, 28, 29 et des résistances parallèles 33, 34, 35, l'ensemble étant commuté par les commutateurs électroniques 21 et 22 aux bornes 6, 105 et 7, 205 du moteur à induction triphasé. Les trois condensateurs 30, 31, 32 sont montés en étoile avec la borne commune 36, 37, 38, avec respectivement une résistance parallèle 33, 34, 35. Sur les bornes 43, 44, 45 du circuit étoile obtenu, les trois résistances serie 27, 28, 29 sont respectivement connectées aboutissant sur les bornes 16, 19, 20. La borne 16 directement connectée sur sur la borne 4, 9, 8. La borne 19 est connectée sur l'électrode de référence du commutateur électronique 21, ce dernier avec son électrode commutée connectée sur la borne 17, 105, 6. L'électrode de commande 14 du commutateur électronique 21 est relié à la borne 17 par le circuit série composé du contact repos 23 et de la résistance 25. La borne 20 est connectée sur l' électrode de référence du commutateur électronique 22, ce dernier avec son électrode commutée sur la borne 18, 205, 7. L'électrode de commande 15 du commutateur électronique 22 est connectée sur la borne 18 par le circuit série composé du contact repos 24 et de la résistance 26.

Lors de la mise sous tension du moteur à induction triphasé 5, les contacts repos 23 et 24 sont ouverts, les commutateurs électroniques 21 et 22 sont non conducteurs ce qui isole le circuit étoile de freinage. Lors de la mise hors tension du moteur, la fermeture des contacts repos 23 et 24 entraîne la conduction des commutateurs électroniques 21 et 22, et le freinage électromagnétique du moteur par des courants alternatifs crées par les condensateurs 30, 31, 32 commutés aux bornes du moteur à induction triphasé. L'addition de résistances série 27, 28, 29 et des résistances parallèle 33, 34, 35 permet d'amèliorer le freinage en dissipant l'énergie cinéti du moteur à induction triphasé.

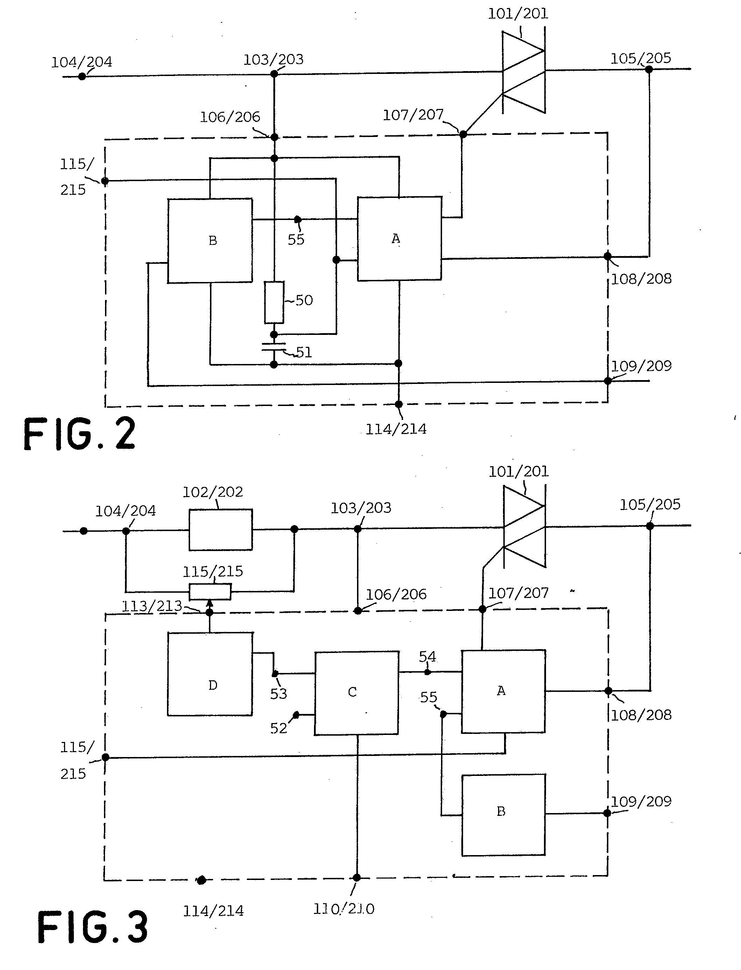

Deux exemples de schéma synotype des modules 100, et 200 utilisés pour la commande des commuteurs électroniques sont montrée fig. 2 et 3.

Le synoptype montré fig. 2 se compose du commutateur électronique 101, 201 du type classique appelé triac, commandé par un circuit intégré A de type classique permettant la commande par angle de phase du triac 101, 201. La synchronisation du circuit intégré A est réalisé à partir du nommé neutre artificiel aboutissant sur la borne 109, 209 et mise en forme par le circuit B réalisé à partir d'un amplificateur opérationnel monté en comparateur à hystérésis. La variation progressive de l'angle de phase en fonction du temps est réalisée par un circuit série composé de la résistance 50 et du condensateur 51, fournissant au circuit intégré A une tension qui croît progressivement. L'entrée logique 115, 215 permet d'invalider la commande du circuit par décharge du condensateur 51. L'entrée 108, 208 donne l'information de conduction ou de non conduction du triac 101, 201 au circuit intégré A.

La fig. 3 montre un exemple de module plus élaboré, où la commande d'angle de phase est fonction de l'intensité du courant passant dans le commutateur électronique 101, 201, comme mentionné ci-avant.

On retrouve, comme dans la fig. 3, le triac 101, 201, le circuit de commande du triac A et le circuit de mise en forme de la synchronisation B. Le synoptique montré fig. 3 comprend en outre la résistance série 102, 202, le potentiomètre 115, 215 permettant de régler l'intensité du courant désirée dans le triac 101, 201, le circuit D permettant de convertir la tension alternative en tension continue, le circuit C d'asservissement de l'intensité en fonction d'une référence de tension sur la borne 52.

Lors de la mise sous tension du système de démarrage, l'intensité du courant passant dans le triac 101, 201, la résistance 102, 202 est nulle. La tension sur la bourne 53 du convertisseur D est nulle, le circuit d'asservissement C compare la tension de la borne 53 à la tension de la consigne borne 52 et augmente la tension de sortie 54 ce qui provoque l'augmentation de l'angle de phase du triac 101, 201. L'intensité du courant augmente jusqu'à ce qu'elle soit égale en valeur convertie par le circuit D à la consigne de la borne 52. On obtient une régulation d'intensité du courant dans le triac 101, 201. Ladite régulation agit pendant le démarrage du moteur à induction triphasé, après ledit démarrage l'angle de commande de phase est maximun, et l'intensité du courant est inférieure à la consigne et ladite régulation n'agit plus. La sortie du circuit C sur la borne 110, 210 permet de signaler l'action ou la non action de ladite régulation. Si, par suite de surcharge ou de détérioration du moteur à induction triphasé l'intensité du courant tend à devenir supérieure à la consigne la régulation agit en réduisant l'angle de commande de phase du triac 101,201 ce qui est signalé par la sortie 110, 210.

Les courbes des fig. 4, 5, et 6 montrent les tensions et les courants du système de démarrage selon la présente invention.

La fig. 4 montre les courbes de tension et de courant pour un angle de commande de phase de 60 degrés. La courbe 4A montre la tension du neutre artificiel sur le module 100, la courbe 4B la mise en forme du neutre artificiel servant de référence de phase et al courbe 4C l'intensité du courant dans le commutateur électronique 101. De même pour le module 200, la courbe 4D est la tension du neutre artificiel, la courbe 4E la mise en forme du neutre artificiel, la courbe 4F l'intensité dans le commutateur électronique 201.

La fig. 5 montre les mêmes courbes que la fig. 4 pour un angle de commande de phase de 90 degrés.

La fig. 6 montre les mêmes courbes que la fig. 5 pour un angle de commande de phase de 120 degrés.

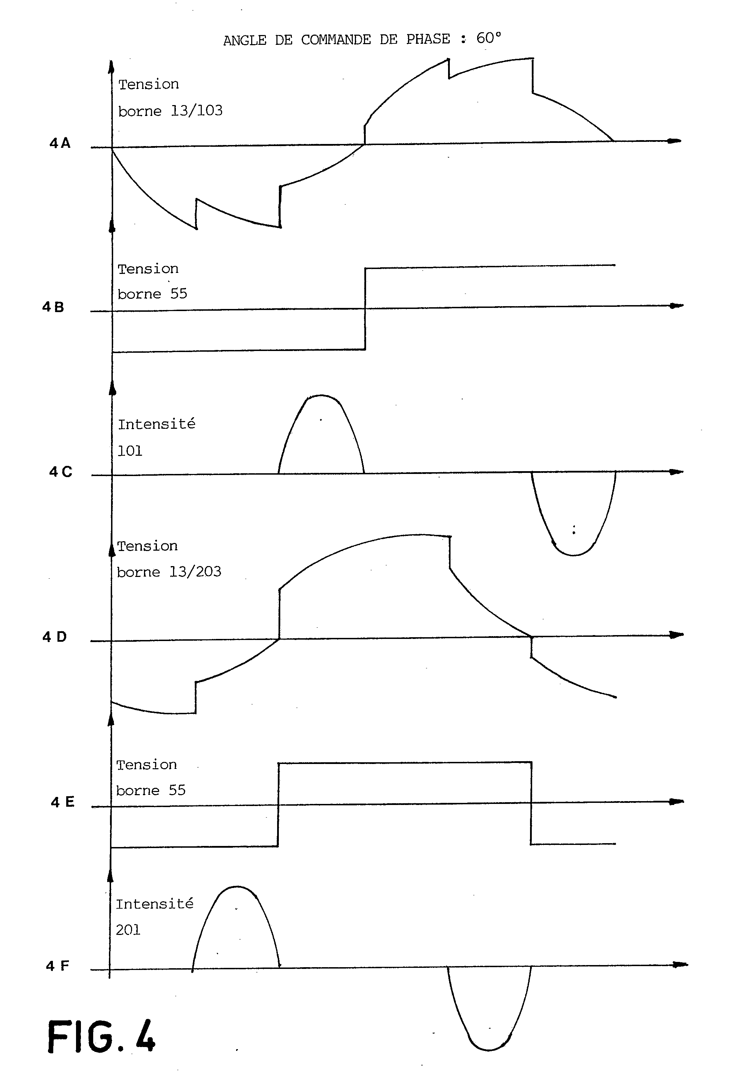

L'examen des courbes fig. 4, 5 et 6 montre la variation des angles de synchronisation entre chaque module due au neutre artificiel: Les synchronisations 4B et 4E des modules 100 et 200 sont déphasées de 60 degrés, les synchronisations 5B et 5E sont déphasés de 90 degrés, les synchronisations 6B et 6E sont déphasées de 120 degrés.

On peut également observer la variation du déphasage entre les intensités des courants dans les commutateurs électroniques 101 et 201 qui est de 60 degrés sur les courbes 4C et 4F pour passer à environ 90 degrés sur les courbes 6C et 6F. Lorsque l'angle d'ouverture de commande de phase atteint la valeur maximun de 180 degrés le déphasage entre les intensités des courant devient égal à 120 degrés pour former un système triphasé équilibré.

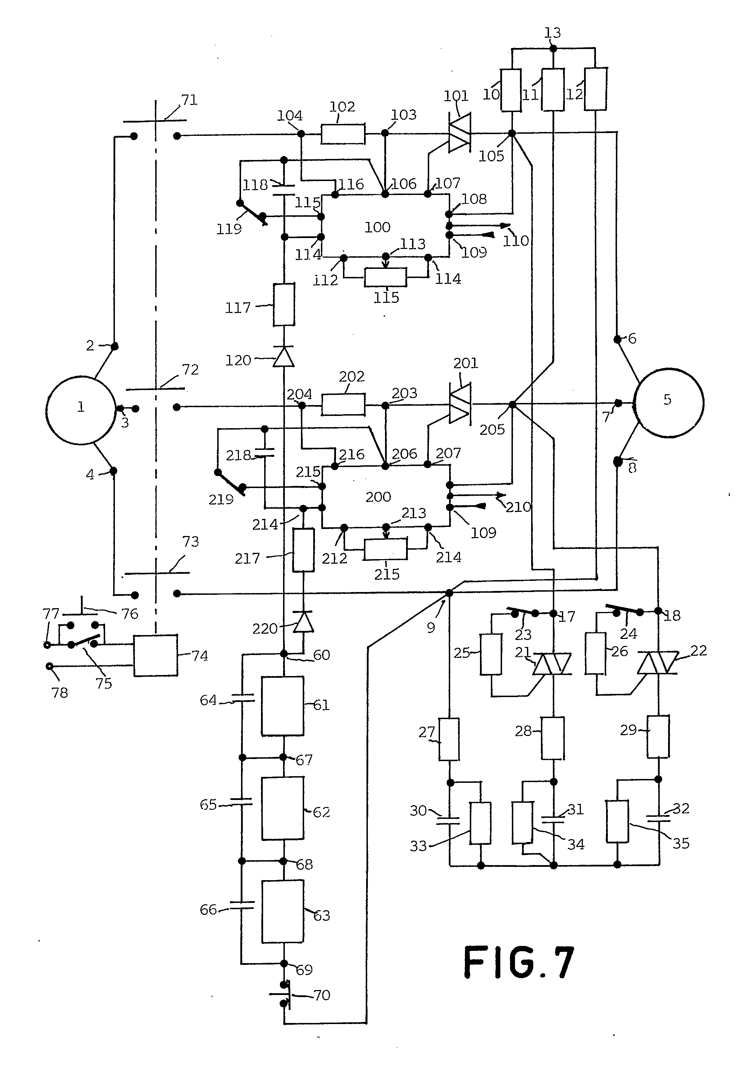

Une forme de réalisation préférentielle de la présente invention est représentée fig. 7 dans laquelle la commande de mise sous tension du moteur à induction triphasé 5 est effectuée par le bouton poussoir à fermeture 76, et la mise hors tension avec freinage par le bouton poussoir à ouverture 70. Pour isoler la source 1 de courant alternatif, lors de la mise hors tension, on place un contacteur composé de la bobine 74 et des contacts 71, 72, 73, placés respectivement entre les bornes 2 et 104, 3 et 204 4 et 9. L'alimentation des modules 100 et 200 est réalisée par un circuit étoile avec la borne 60 comme point commun. La borne 114 est reliée à la borne 60 par la résistance 117 et la diode 120 en série. La borne 214 est reliée à la borne 60 par la résistance 217 et la diode 220 en série. La troisième partie du circuit étoile est composée d'un circuit série issu de la borne 60, aboutissant à la borne 9, comprenant trois bobines de relais 61, 62, 63, et le bouton poussoir à ouverture 70. Pour stabiliser le courant redressé par ce circuit étoile, on ajoute le condensateur 118 sur les bornes 106 et 114, le condensateur 218 sur les bornes 206 et 214 et les condensateurs 64, 65, 66 en parallèle respectivement sur les bobines 61, 62, 63 des relais. La bobine 74 du contacteur est alimentée par une source de courant interrompu par le bouton poussoir 76, ledit bouton poussoir avec le contact travail 75 en parallèle. La bobine 61 du relais commande le contact 75. La bobine 62 du relais commande les contact repos 119 et 219 connectés respectivement entre les bornes 106 et 115, 206 et 215. La bobine 63 du relais commande les contacts repos 23 et 24. L'action sur le bouton poussoir 76 provoque la commutation des contacts 70, 71 et 72 du contacteur ce qui alimente les modules 100 et 200 et les bobines 61, 62, 63 des relais. L'alimentation des bobines 61, 62, 63 des relais produit l'autoalimentation de la bobine 74, la validation des modules 100 et 200 par les contact 119 et 219, l'isolation du système de freinage par les contacts 23 et 24. Après action sur le bouton poussoir 76 le moteur démarre et reste en fonctionnement jusqu'à action sur le bouton poussoir d'arrêt 70. Ce dernier après activation interrompt le courant dans les bobines 61, 62, 63, ce qui provoque l'arrêt de conduction des commutateurs électroniques 101 et 201, l'ouverture des contacts 71, 72, 73 du contacteur, la mise en circuit du système de freinage.

Le schéma de la fig. 7 montre une réalisation économique et complète de système de commande de moteur à induction triphasé avec démarrage progressif et freinage. Le système décrit dans la présente invention peut être utilisé d'une manière spécifique pour une machine possédant un ou plusieurs moteurs à induction triphasés ou être exploité sous forme de produit standard utilisé plus particulièrement dans l'automatisme.

**Revendications**

1- Dispositif de démarrage de moteur à induction triphasé, ledit moteur à induction triphasé (5), monté en étoile ou en triangle, avec trois bornes (6), (7), (8), une source de courant triphasé (1) avec trois bornes (2), (3), (4), ledit dispositif de démarrage de moteur à induction trphasé est composé d'un commutateur électronique (101) avec une borne (103) connectée sur la borne (2), (104) et une borne (105) connectée sur la borne (6), un autre commutateur électronique (201) avec une borne (203) connectée sur la borne (3), (204) et une borne (205) connectée sur la borne (7), les bornes (4), (8) et (9) sont connectées directemement. Lesdits commutateurs électroniques (101) et (201) sont commandés par l'électrode de commande reliée respectivement à la borne (107) et (207) des modules électroniques (100) et (200), lesdits modules électroniques comprennent en outre une borne (108), (208) connectée sur la borne (105), (205), une autre borne (109), (209) d'entrée de synchronisation reliée à la borne (13) nommée neutre artificiel, ladite borne (13) étant le point commun de trois impédances (10), (11), (12), montées en étoile sur les bornes (105), (205), et (9), l'alimentation des modules (100) et (200) est faite entre les bornes (114), (214), et (106), (206), cette dernière reliée à la borne (103), (203), ledit dispositif de démarrage de moteur à induction triphasé est caractérisé en ce qu'il produit des tensions qui augmentent progressivement aux bornes (6), (7), (8) dudit moteur à induction triphasé lors du démarrage afin de réduire les surintensités électriques et les chocs mécaniques dans ledit moteur à induction triphasé et dans la machine entaînée par ledit moteur.

2- Dispositif de démarrage de moteur à induction triphasé conforme à la revendication 1, caractérisé en ce que les modules électroniques (100) et (200) valident ou invalident la commande des commutateurs électroniques (101) et (201) au moyen d'une entrée logique sur la borne (115) et (215) permettant la la mise sous tension ou la mise hors tension dudit moteur à induction triphasé (5).

3- Dispositif de démarrage de moteur à induction triphasé conforme la revendication 1 et 2, caractérisé en ce que les modules (100) et (200) limitent à une valeur déterminée, l'intensité du courant dans les commutateurs électroniques (101) et (201) au moyen de deux résistances (102) et (202) placées respectivement entre les bornes (104) et (103), (204) et (203), et au moyen d'un système de régulation interne à chaque module (100) et (200) qui diminue l'angle de conduction des commutateurs électroniques (101) et (201) lorsque l'intensité du courant dans les commutateurs électroniques (101) et (201) dépasse ladite valeur déterminée, chaque système de régulation des modules (100) et (200) possède une entrée sur la borne (116) et (216) connectée respectivement sur la borne (104) et (204).

4- Dispositif de démarrage de moteur à induction triphasé conforme à la revendication 3, caractérisé en ce que chaque module électronique (100) et (200) permet de régler la valeur de la limite d'intensité de courant dans chaque commutateur électronique (101) et (201) au moyen du potentiotre (115) connecté aux bornes (112), (113), (114) du module (100) et du potentiomètre (215) connecté aux bornes (212), (213), (214) du module (200) lesdits potentiomètres (115) et (215) pouvant être couplés mécaniquement afin de pouvoir effectuer les deux réglages simultanément.

5- Dispositif de démarrage de moteur à induction triphasé conforme à la revendication 3 et 4, caractérisé en ce que chaque module (100) et (200) permet de détecter si ledit système de régulation interne à chacun desdits modules est activé ou non au moyen d'un système de détection interne à chaque module (100) et (200) aboutissant chacun sur une sortie logique borne (110) et (210) qui peut permettre de signaler l'état de démarrage, d'anomalie dudit moteur ou pour mettre hors tension ledit moteur si ledit système de régulation reste actif pendant un temps excessif.

6- Dispositif de démarrage de moteur à induction triphasé conforme à l'une quelconque des revendications 1 à 5, caractérisé en ce qu'il est associé à un sysème de freinage électromagnétique, actif lors de la mise hors tension dudit moteur à induction triphasé, ledit système de freinage réalisé au moyen de trois condensateurs (30), (31), (32) montés en étoile ou en triangle, lequel montage étoile ou triangle à une borne connectée sur la borne (4), (8), (9), une autre borne connectée sur la borne (105), (6) à travers le commutateur électronique (21) et une autre borne connectée sur la borne (205), (7) à travers le commutateur électronique (22), chacun desdits commutateurs électroniques avec son électrode de commande connectée à son électrode commandée à l'aide d'un circuit série composé d'une résistance (25) et (26) et d'un contact (23) et (24).

7- Dispositif de démarrage de moteur à induction triphasé conforme à la revendication 6, caractérisé en ce que la système de freinage est amélioré au moyen de trois résistances (27), (28), (29), montées en série sur les condensateurs (30), (31), (32).

8- Dispositif de démarrage de moteur à induction triphasé conforme à la revendication 6 et 7, caractérisé en ce que le système de freinage est amélioré au moyen de trois résistances (33), (34), (35), montées en parallèle sur les condensateurs (30), (31), (32).

9- Dispositif de démarrage de moteur à induction triphasé conforme à l'une quelconques des revendications 1 à 8, caractérisé en ce qu'il réalise d'une manière économique l'alimentation des modules (100) et (200), la commutation dudit dispositif de démarrage et la commande au moyen d'un circuit étoile avec une borne commune (60), la première partie circuit étoile est composée de la diode (120) et de la résistance (117) en série aboutissant sur la borne (114), la deuxième partie dudit circuit étoile est composé de la diode (220) et de la résistance (217) en série aboutissant sur la borne (214), la troisième partie est composée de une à trois bobines de relais (61), (62), (63) et un bouton poussoir à ouverture (70), l'ensemble monté en série et aboutissant sur la borne (9), sur ledit circuit étoile, on place en outre le condensateur (118) entre les bornes (106) et (114), le condensateur (218) entre les bornes (206) et (214), les condensateurs (64), (65), (66) respectivement en parallèle sur les bobines (61), (62), (63) des relais; la bobine (61) du relais commande le contact travail (75), ledit contact (75) avec le bouton poussoir à fermeture (76) en parallèle commande la commutation de la source (1), la bobine (62) du relais commande les deux contacts repos (119) et (219), ces derniers respectivement connectés entre les bornes (115) et (106), (215) et (206); la bobine (63) du relais commande les deux contacts repos (23) et (24).

FIG.1

0250339

FIG. 2

FIG. 3

ANGLE DE COMMANDE DE PHASE : 60°

4A — Tension borne 13/103

4B — Tension borne 55

4C — Intensité 101

4D — Tension borne 13/203

4E — Tension borne 55

4F — Intensité 201

**FIG.4**

0250339

ANGLE DE COMMANDE DE PHASE : 90°

Tension borne 13/103 — 5A

Tension borne 55 — 5B

Intensité 101 — 5C

Tension borne 13/203 — 5D

Tension borne 55 — 5E

Intensité 201 — 5F

0250339

# FIG. 5

ANGLE DE COMMANDE DE PHASE : 120°

0250339

6 A — Tension borne 13/103

6 B — Tension borne 55

6C — Intensité 101

6D — Tension borne 13/203

6 E — Tension borne 55

6 F — Intensité 201

FIG.6

0250339

FIG.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | US-A-4 072 880 (OSHIMA et al.) <br> * Figure 3; colonne 3, ligne 10 - colonne 6, ligne 2 * | 1-5 | H 02 P 1/28 <br> H 02 P 3/22 |
| A,D | US-A-4 084 406 (BRENNEMANN) <br> * Figure 11; colonne 8, ligne 35 - colonne 10, ligne 53 * | 1-5 | |
| A | US-A-4 514 677 (KAUFMAN III et al.) <br> * Abrégé; figure 1 * | 6 | |
| A | DE-A-2 503 754 (SPRECHER & SCHUH) <br> * Figure 3; revendication 1 * | 1-5 | |
| A | DE-A-2 620 346 (LINDE) <br> * Figure 4; revendications 1,4 * | 6 | DOMAINES TECHNIQUES RECHERCHES (Int. Cl.4) <br><br> H 02 P |
| A | US-A-4 333 046 (LEE) <br> * Abrégé; figures 2,5 * | 3 | |

Le présent rapport de recherche a été établi pour toutes les revendications

| Lieu de la recherche <br> LA HAYE | Date d'achèvement de la recherche <br> 08-09-1987 | Examinateur <br> KOLBE W.H. |
|---|---|---|